# EUROPEAN PATENT APPLICATION

(11) **EP 4 080 240 A1**
(43) Date of publication of application: **26.10.2022**
(21) Application number: 21169654.7
(22) Date of filing: 21.04.2021
(51) Int. Cl.: G01S 7/41, G01S 7/48, G01S 7/40, G01S 7/497, G01S 13/42, G01S 13/86, G01S 13/931, G01S 17/42, G01S 17/86, G01S 17/931, B60W 30/095, G08G 1/16

(54) **IMPROVED EVALUATION OF RADAR OR LIDAR DATA WITH REDUCED CLASSIFICATION OVER-CONFIDENCE**

(71) Applicant: Robert Bosch GmbH, 70442 Stuttgart (DE)
(72) Inventor: Patel, Kanil, 70435 Stuttgart (DE)

(57) **Abstract**

A method (100) for evaluating at least one record of radar or lidar data (2), wherein the data (2) comprises the dependence of at least one measurement quantity that has been derived from reflected radar or lidar radiation on spatial coordinates, the method comprising the steps of:
• mapping (110), by means of a given classifier (1), the record of radar or lidar data (2) to a set of confidence scores (3) with respect to classes of a given classification;
• processing (120) the set of confidence scores (3), and/or an intermediate product from which the classifier computes confidence scores (3), by means of a post-hoc calibration operation (4) that is configured to match the confidence scores (3) to the classification accuracy (1a) of the classifier (1) with respect to the record of radar or lidar data (2); and
• outputting (130) the so-processed set of confidence scores (3), and/or a set of confidence scores (3) that results from the so-processed intermediate product, as an evaluation result (3*) of the record of radar or lidar data (2).

A method (200) for training at least one post-hoc calibration operation (4) for use in the method (100).

## Description

The present invention relates to the evaluation of radar or lidar data by means of classifiers, e.g., for the purpose of automatically steering a vehicle through road traffic.

### Background

Automatic steering of a vehicle through road traffic requires capturing the environment of the vehicle and taking action in case a collision with an object in the environment of the vehicle is imminent. Safe automated driving also requires obtaining a representation of the environment of the vehicle and localizing objects.

Capturing objects by means of radar is independent from the lighting conditions in the traffic scene. For example, even at night, objects may be detected at a large distance without blinding oncoming traffic with high-beam illumination. Also, radar measurements immediately yield the distance to an object and the speed of that object. This information is important for determining whether a collision with an object is possible. However, the radar data does not allow a direct determination of the type of an object.

DE 10 2018 222 672 A1 discloses a method for determining the spatial orientation of an object based on a measurement signal that comprises the response of the object to electromagnetic interrogation radiation. In particular, this response may comprise a reflection of the interrogation radiation. A classifier, and/or a regressor, is used to determine the sought spatial orientation.

### Disclosure of the invention

The invention provides a method for evaluating at least one record of radar or lidar data. In particular, radar data may be recorded in the form of a spectrum or in the form of a point cloud, whereas lidar data is usually recorded in the form of a point cloud. Both a spectrum and a point cloud comprise the dependence of at least one measurement quantity that has been derived from reflected radiation on spatial coordinates. For example, such spatial coordinates may comprise a range and one or more angles. The main difference between a point cloud and a spectrum is that the dependence on the spatial coordinate is a discrete one: Values of the measurement quantity are attributed to

The classifier is configured to map a record of radar or lidar data to a set of confidence scores with respect to classes of a given classification. These scores represent confidences with which the classifier attributes the record of data to the respective classes. The classes may, for example, represent types of objects, such as other traffic participants or obstacles, or overall assessments of situations, such as a risk level.

By means of a given classifier, the to-be-evaluated record of radar or lidar data is mapped to a set of confidence scores with respect to the available classes. This set of confidence scores, and/or an intermediate product from which the classifier computes confidence scores, is processed by means of a post-hoc calibration. The post-hoc calibration is configured to match the confidence scores to the classification accuracy of the classifier with respect to the record of radar or lidar data. The so-processed set of confidence scores, and/or a set of confidence scores that results from the so-processed intermediate product, is outputted as an evaluation result of the record of radar or lidar data.

For example, the classifier may compute logits, which are logarithms of odds that the record of radar or lidar data represents a particular class. It may then transform these logits into confidence scores by a softmax function, so that a set of confidence scores that add up to 1 results. The processing by the calibration operation may alter the logits, and from these logits, the classifier may then obtain new confidence scores. In this manner, the calibration may be performed on the full information generated by the classifier before part of this information is levelled by application of the softmax function.

It was found that a typical training of classifiers based on records of data that are labelled with "ground truth" classes encourages a tendency to output over-confident predictions. The "ground truth" labels are usually "one-hot", i.e., they name exactly one class to which the classifier should attribute the record of data. When the classifier attributes the record of data to the correct class, but with a lesser confidence than 1, this is penalized by the loss function with which the classifier is trained. Thus, the classifier learns to output high confidences.

However, this does not always accurately reflect the reality that several factors introduce uncertainty into records of radar or lidar data. For example, acquired signals may be corrupted due to noise, interference and environmental effects. Also, because radar and lidar measurements rely on radiation that has been reflected from some discrete locations on objects, there may be ambiguity between different objects when viewed from different angles and distances. I.e., object A viewed from angle α on the one hand and object B viewed from angle β on the other hand may give rise to quite similar records of radar or lidar data. Furthermore, the dependence of the records of data on perspectives and distances may cause different instances of the same object class to give rise to quite different records of data. If the records of data analyzed by the classifier after the training are from a different domain than the training records of data with which the classifier was trained in some aspect, this may introduce a further element of uncertainty into the classification of records of data.

Therefore, the confidence scores, and/or an intermediate product from which they are derived, are processed by the post-hoc calibration operation. The calibration of the classifier is considered to be ideal if the confidence with which the classifier attributes a record of data to a class matches the probability that this class is actually the correct one, i.e. the classification accuracy.

A good calibration of the classifier is important for the assessment to which extent the outputted evaluation result can be trusted. The whole point of evaluating records of radar or lidar data is usually that some technical system, such as a vehicle, is to be actuated based on the evaluation result. If the classifier is well calibrated, the confidence score outputted by the classifier is an indication of the probability that an action in the technical system taken in response to this confidence score is appropriate in the situation at hand. For example, this probability may be considered when choosing one of several possible actions, so as to reduce damage or other adverse consequences in case the classification turns out not to be correct.

In a particularly advantageous embodiment, the record of radar or lidar data specifically is a record of data that has been acquired using at least one radar or lidar sensor that is carried by a vehicle. This sensor is configured to monitor at least part of the environment of the vehicle. The method further comprises: determining an actuation signal based at least in part on the evaluation result; and actuating the vehicle with the actuation signal. For example, the evaluation result may be used by a trajectory planner in an at least partially autonomous vehicle, so that a trajectory is planned that will most probably not intersect the trajectories (i.e., collide with) any other objects. In a human-driven vehicle, the evaluation result may be used in assistance systems that, for example, brakes the vehicle in case the radar sensor senses an obstacle that is not yet visible to the driver.

In these applications, choosing the wrong action because of a wrong classification may lead to damage and/or injury. For example, if an obstacle is detected while there is in fact no obstacle present, the vehicle may brake unexpectedly. This may come as a complete surprise to a following driver, who might not be able to stop his vehicle in time to avoid a collision.

Therefore, besides the class to which the record of data is attributed with the highest confidence score, the value of this highest confidence score may be an important factor to consider when choosing a to-be-performed action. In particular, a severity of the action that the actuation signal is to cause may be chosen to be commensurate with the value of the highest confidence score in the evaluation result. I.e., the higher this confidence score, the more severe the chosen action is. In this context, the severity of an action may, for example, comprise a cost, a danger, a risk or even a damage that the action is likely to incur. In an extreme example, if it is certain that a collision of the vehicle with an unprotected person is imminent, then it may be warranted to steer the vehicle into a concrete wall, so that its kinetic energy will be absorbed by the crash-absorbing elements of the vehicle, rather than by the unprotected person. But if the assessment by the classifier is not sufficiently certain, it is not warranted to destroy the whole vehicle and subject its occupant to the high force of deceleration. It may then be more appropriate to apply maximum braking power and change the orientation of the vehicle such that, in the event of a collision, it exposes a part of its outer surface to the person that will cause lesser injury.

Also, a good calibration of the classifier facilitates the fusion of radar or lidar data with more measurement data: If it is known to which extent an assignment of the record of radar or lidar data to a particular class is trustworthy, this result may be meaningfully aggregated with other measurement data to form a final result. Therefore, in a particularly advantageous embodiment, the actuation signal is determined based additionally on an evaluation of measurement data that has been acquired by at least one further sensor. This sensor is also configured to monitor part of the environment of the vehicle. This part of the environment may be identical to, or overlap with, the part of the environment from which the record of radar or lidar data was acquired. But this is not essential. Even measurement data from a completely different part of the environment may be meaningfully fused with the evaluation result. The further sensor may be another radar sensor, but it may also be a sensor that uses a different measurement modality, such as a camera. In particular, such fusion of measurement data may be used to resolve ambiguities that are inherent to radar or lidar measurements. For example, a camera image may be used to distinguish between a sport utility vehicle (SUV) and a light truck that have comparable outer dimensions.

In a further particularly advantageous embodiment, the processing by means of the post-hoc calibration operation comprises:
- choosing, based on at least property of a scene captured in a calibration record of radar or lidar data, one out of several post-hoc calibration operations; and
- processing the confidence scores determined for this record of data with the chosen post-hoc calibration operation.

In this manner, the post-hoc calibration may be even better adapted to the processing of records of radar or lidar data. Training data sets of records of radar or lidar data that are used for training a classifier tend to be "unbalanced" with one or more properties of the scenes captured in the records of data. For example, instances of certain objects may be present in scenes in which the training records of data have been captured more often than instances of other objects. Also, the training data set may contain more objects that were farther away from the radar or lidar sensor than object that were close to this sensor at the time of capturing the respective record of data. The training data set is also more likely to contain instances of larger objects than it is to contain instances of smaller objects. As it will be discussed later, the effect of an "unbalanced" data set on the calibration of the classifier may be reduced by using several calibration operations that each have been trained on "balanced" data sets.

Thus, the property according to which the post-hoc calibration operation is chosen may specifically comprise one or more of:
- the class for which the classifier attributes the highest confidence score to the record of radar or lidar data;
- a distance between a radar or lidar sensor that has acquired the record of data and at least one object in the scene; and
- a size of at least one object in the scene.

In a simple example, it may be determined whether the object represented by the record of data is of size class S, M, L, XL or XXL, and depending on the size class, a post-hoc calibration operation may be chosen.

The post-hoc calibration may, for example, comprise at least one function whose behaviour is characterized by trained parameters. Examples of such functions include a neural network, a scaling function (such as scaling by a learned temperature), a Gaussian process, and/or a histogram binning function. Consequently, the invention also provides a method for training at least one post-hoc calibration operation for use in the method described above.

This training method starts with providing a trained classifier. This classifier is configured to map a record of radar or lidar data to a set of confidence scores with respect to classes of a given classification. Also, a set of calibration records of radar or lidar data is provided. Each such record of data is labelled with one ground truth class. For example, the calibration data may be held-back labelled test or validation data that were not used in the training of the classifier.

The calibration records of radar or lidar data are processed with the method described above, wherein, in this processing, the to-be-trained post-hoc calibration operation is used. For each record of calibration radar or lidar data, the class with the highest confidence score in the evaluation product is determined as the detected class to which the classifier attributes this record of data.

Based on a comparison between detected classes and ground truth classes for calibration records of radar or lidar data, at least one classification accuracy is determined. For example, the classification accuracy may represent a percentage of correct classification decisions. A calibration score of the post-hoc calibration operation is then determined based on a comparison between at least one classification accuracy and highest confidence scores of records of data from which this classification accuracy was determined. Parameters that characterize the behaviour of the post-hoc calibration operation are then optimized with the goal of improving the calibration score.

In this manner, the post-hoc calibration may be adapted both to a particular classifier and to a particular domain of data. For one and the same training data set, the optimal post-hoc calibration depends on the classifier and on the quality of its training: for a well-trained classifier, an output of a one-hot set of confidence scores is a lot closer to reality than for a mediocre classifier. Also, the optimal post-hoc calibration depends on the domain of the data used: if this domain matches the domain of the training records of data, then the confidences tend to be higher than if the domain is rather different.

In a particularly advantageous embodiment, the calibration records of radar or lidar data are grouped into bins with respect to at least one property of a scene captured in the respective records of radar or lidar data. The number and the distribution of bins are chosen such that the number of calibration records of data per bin is substantially similar. During the training, whenever a concrete calibration record of radar or lidar data is evaluated and the performance of the post-hoc calibration operation is measured, one of several post-hoc calibration operations is chosen depending on the bin to which this record of data belongs.

As discussed before, the property may in particular comprise one or more of:
- the class for which the classifier attributes the highest confidence score to the calibration record of radar or lidar data;
- a distance between a radar or lidar sensor that has acquired the calibration record of data and at least one object in the scene; and
- a size of at least one object in the scene.

In the example of the object size being chosen as the property, one possible outcome may be that by dividing the calibration records of data into three size classes S, M and L along certain boundaries, the given set of calibration records of data may be split more or less evenly across these size classes. Another possible outcome may be that a split in five size classes S, M, L, XL and XXL along certain different boundaries results in a more balanced distribution of the training records of data among the size classes. After the split has been fixed, whenever a record of data represents an object of a particular size class, the respective post-hoc calibration information assigned to this size class is used.

The situation is somewhat akin to the allocation of duties in courts or other authorities, where the total workload is divided among the available officials depending on the first letter of the citizen's last name. The goal is to assign roughly the same quantitative workload of cases to every official to ensure that the process is running in a unitary manner and does not vary too much between officials. The number of bins corresponds to the number of available officials, and the boundaries between the bins are determined according to the frequency distribution of last names starting with the different letters. For example, one official may be assigned letters Q and X to Z and have roughly the same amount of work to do than another official who is assigned the frequent letter M.

The methods described above may be wholly or partially computer-implemented, and thus embodied in software. The invention therefore also relates to a computer program, comprising machine-readable instructions that, when executed by one or more computers, cause the one or more computers to perform a method described above. In this respect, control units for vehicles and other embedded systems that may run executable program code are to be understood to be computers as well. A non-transitory storage medium, and/or a download product, may comprise the computer program. A download product is an electronic product that may be sold online and transferred over a network for immediate fulfilment. One or more computers may be equipped with said computer program, and/or with said non-transitory storage medium and/or download product.

In the following, the invention and its preferred embodiments are illustrated using Figures without any intention to limit the scope of the invention.

The Figures show:
Figure 1 Exemplary embodiment of the method 100 for evaluating a record of radar or lidar data 2;
Figure 2 Effect of different post-hoc calibration operations 4 on evaluation results 3*;
Figure 3 Exemplary embodiment of the method 200 for training a post-hoc calibration operation 4.

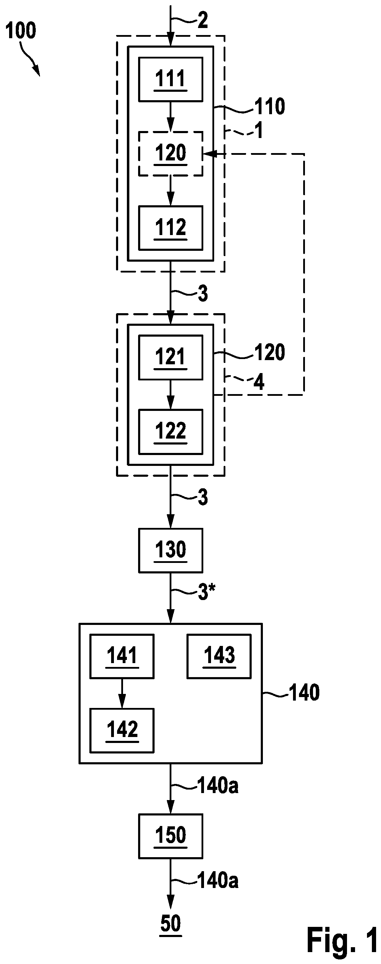

Figure 1 is a schematic flow chart of an exemplary embodiment of the method 100 for evaluating a record of radar or lidar data 2.

In step 110, the record of radar or lidar data 2 is mapped, by means of a given classifier 1, to a set of confidence scores 3 with respect to classes of a given classification.

In step 120, the set of confidence scores 3, and/or an intermediate product from which the classifier computes confidence scores 3, is processed and thereby altered. The processing is performed by means of a post-hoc calibration operation 4. This post-hoc calibration operation 4 is configured to match the confidence scores 3 to the classification accuracy 1a of the classifier 1 with respect to the record of radar or lidar data 2. As discussed previously, in particular, over-confidences are reduced in this process.

In step 130, the so-processed set of confidence scores 3, and/or a set of confidence scores 3 that results from the so-processed intermediate product, are outputted as an evaluation result 3* of the record of radar or lidar data 2.

In step 140, based at least in part on the evaluation result 3*, an actuation signal 140a for a vehicle50 is determined. In step 150, the vehicle 50 is actuated with the actuation signal 140a.

In particular, the mapping 110 of the record of radar or lidar data 2 to confidence scores 3 may comprise computing logits in block 111 and transforming these logits into confidence scores 3 in block 112. The processing 120 may then work on the logits, rather than on the confidence scores. I.e., the processing 120 may be moved between blocks 111 and 112.

According to block 121, based on at least property of a scene captured in a calibration record of radar or lidar data 2, one out of several post-hoc calibration operations 4 may be chosen. This post-hoc calibration operation 4 may then be applied according to block 122.

According to block 141, out of several possible actions, an action to be performed by the vehicle 50 may be chosen in the course of the determining 140 of an actuation signal 140a. The action is chosen such that a severity of this action is commensurate with the highest confidence score in the evaluation result 3*. According to block 142, an actuation signal 140a that causes the vehicle 50 to perform the chosen action is then determined.

According to block 143, the actuation signal 140a may be additionally determined based on an evaluation of measurement data that has been acquired by at least one further sensor that is configured to monitor at least part of the environment of the vehicle 50. In other words, measurement data from multiple sensors, or even from multiple measurement modalities, may be fused.

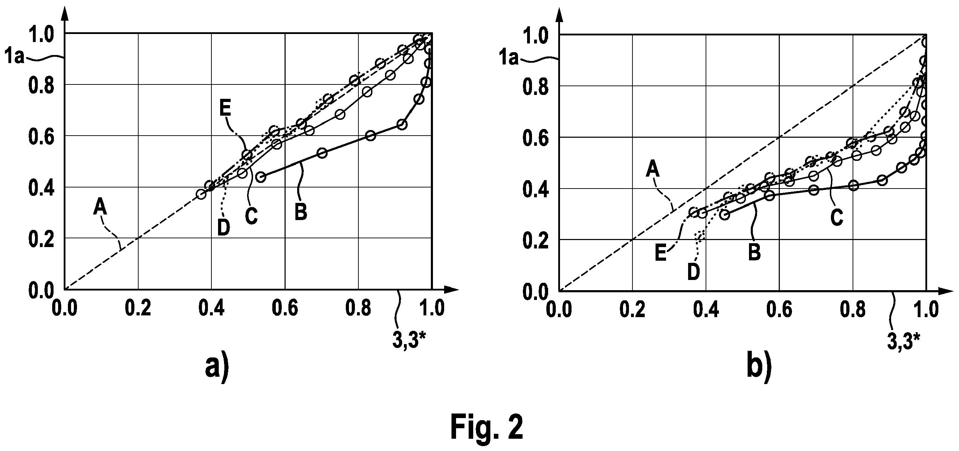

Figure 2 shows some examples how the confidence scores 3* for records of radar or lidar data 2 may be brought closer to the respective accuracy 1a with which the classifier 1 attributes the respective records of data 2 to classes. Plots (a) and (b) have been obtained for different test data sets of records of data 2.

Curve A represents the ideal behaviour of the classifier 1, namely that the predicted conference 3 corresponds exactly to the respective classification accuracy 1a. Curve B represents the actual behaviour of the classifier 1 without any post-hoc calibration. The confidence scores 3 are quite over-confident compared with the ideal behaviour according to curve A.

Curves C, D and E represent the evaluation results 3* that have been obtained using different post-hoc calibration operations 4. Curve C has been obtained using temperature scaling of all confidence scores, i.e, correct ones as well as incorrect ones. Compared with curve B, this already goes a long way towards the ideal behaviour according to curve A. Still further gains are evident for curve D, which has been obtained by an improved scaling method that uses latent Gaussian processes, and curve E, which has been obtained using a discrete binning method based on maximizing the mutual information between the evaluation results 3* and ground truth labels of the records of data 2.

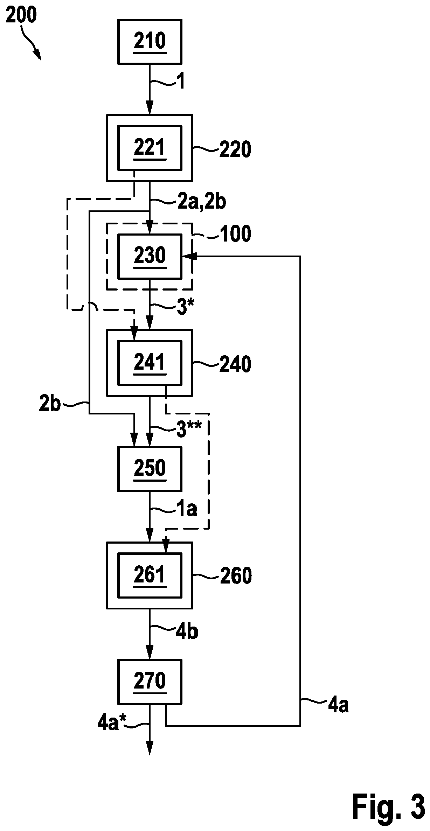

Figure 3 is a schematic flow chart of the method 200 for training at least one post-hoc calibration operation 4.

In step 210, a trained classifier 1 is provided. This trained classifier 1 is configured to map a record of radar or lidar data 2 to a set of confidence scores 3 with respect to classes of a given classification.

In step 220, a set of calibration records of radar or lidar data 2a is provided. Each such record of data 2a is labelled with one ground truth class 2b.

In step 230, the calibration radar or lidar data 2a are processed with the method 100 described above, wherein, in this processing, the to-be-trained post-hoc calibration operation 4 is used.

In step 240, for each calibration record of radar or lidar data 2a, the class with the highest confidence score 3 in the evaluation product 3* is determined as the detected class 3** to which the classifier 1 attributes this record of data 2a.

In step 250, based on a comparison between detected classes 3** and ground truth classes 2b for calibration records of radar or lidar data 2a, at least one classification accuracy 1a is determined.

In step 260, based on a comparison between at least one classification accuracy 1a and highest confidence scores 3 of records of data 2a from which this classification accuracy was determined, a calibration score 4b of the post-hoc calibration operation 4 is determined. As discussed before, the better the highest confidence score 3 is in agreement with the classification accuracy, the better the calibration score 4b.

In step 270, parameters 4a that characterize the behaviour of the post-hoc calibration operation 4 are optimized with the goal of improving the calibration score 4b. The finally optimized state of the parameters 4a is labelled with the reference sign 4a*.

According to block 221, with respect to at least one property of a scene captured in the respective records of radar or lidar data 2a, the calibration records of radar or lidar data 2a may be grouped into bins such that the number of records of data 2a per bin is substantially similar. Whenever a record of data 2a is evaluated in step 230, a post-hoc calibration operation 4 may then be chosen depending on the bin to which this record of data 2a belongs according to block 231. Consequently, this chosen post-hoc calibration operation 4 may then be rated with a calibration score 4b according to block 261.

## Claims

**1.** A method (100) for evaluating at least one record of radar or lidar data (2), wherein the record of data (2) comprises the dependence of at least one measurement quantity that has been derived from reflected radar or lidar radiation on spatial coordinates, the method comprising the steps of:
• mapping (110), by means of a given classifier (1), the record of radar or lidar data (2) to a set of confidence scores (3) with respect to classes of a given classification;
• processing (120) the set of confidence scores (3), and/or an intermediate product from which the classifier computes confidence scores (3), by means of a post-hoc calibration operation (4) that is configured to match the confidence scores (3) to the classification accuracy (1a) of the classifier (1) with respect to the record of radar or lidar data (2); and
• outputting (130) the so-processed set of confidence scores (3), and/or a set of confidence scores (3) that results from the so-processed intermediate product, as an evaluation result (3*) of the record of radar or lidar data (2).

**2.** The method (100) of claim 1, wherein the record of radar or lidar data (2) specifically is a record of data that has been acquired using at least one radar or lidar sensor carried by a vehicle (50) and configured to monitor at least part of the environment of the vehicle (50), and wherein the method further comprises:
• determining (140) an actuation signal (140a) based at least in part on the evaluation result (3*); and
• actuating (150) the vehicle (50) with the actuation signal (140a).

**3.** The method (100) of claim 2, wherein the determining (140) an actuation signal (140a) comprises:
• choosing (141), out of several possible actions, an action to be performed by the vehicle (50), wherein a severity of this action is commensurate with the highest confidence score in the evaluation result (3*); and
• determining (142) an actuation signal (140a) that causes the vehicle (50) to perform the chosen action.

**4.** The method (100) of any one of claims 2 or 3, wherein the actuation signal (140a) is determined (143) based additionally on an evaluation of measurement data that has been acquired by at least one further sensor that is configured to monitor at least part of the environment of the vehicle (50).

**5.** The method (100) of any one of claims 1 to 4, wherein
• the mapping (110) to confidence scores (3) specifically comprises:
∘ computing (111) logits, wherein each logit is a logarithm of odds that the record of data (2) represents a particular class; and
∘ transforming (112) these logits into confidence scores (3) by means of a softmax function; and
• the processing (120) by means of the calibration operation (4) is applied to the logits as intermediate products.

**6.** The method (100) of any one of claims 1 to 5, wherein the processing (120) by means of the post-hoc calibration operation (4) comprises:
• choosing (121), based on at least property of a scene captured in a calibration record of radar or lidar data (2), one out of several post-hoc calibration operations (4); and
• processing (122) the confidence scores (3) determined for this record of data (2) with the chosen post-hoc calibration operation (4).

**7.** The method (100) of claim 6, wherein the property comprises one or more of:
• the class for which the classifier (1) attributes the highest confidence score (3) to the record of radar or lidar data (2);
• a distance between a radar or lidar sensor that has acquired the record of data (2) and at least one object in the scene; and
• a size of at least one object in the scene.

**8.** The method (100) of any one of claims 1 to 7, wherein the post-hoc calibration operation (4) comprises at least one function whose behaviour is **characterized by** trained parameters.

**9.** The method (100) of claim 8, wherein the function comprises a neural network, a scaling function, a Gaussian process, and/or a histogram binning function.

**10.** A method (200) for training at least one post-hoc calibration operation (4) for use in the method (100) of any one of claims 1 to 9, comprising the steps of:
• providing (210) a trained classifier (1) that is configured to map a record of radar or lidar data (2) to a set of confidence scores (3) with respect to classes of a given classification;
• providing (220) a set of calibration records of radar or lidar data (2a), wherein each such record of data (2a) is labelled with one ground truth class (2b);
• processing (230) the calibration radar or lidar data (2a) with the method (100) of any one of claims 1 to 9, wherein, in this processing, the to-be-trained post-hoc calibration operation is used;
• determining (240), for each calibration record of radar or lidar data (2a), the class with the highest confidence score (3) in the evaluation product (3*) as the detected class (3**) to which the classifier (1) attributes this record of data (2a);
• determining (250) at least one classification accuracy (1a) of the trained classifier (1) based on a comparison between detected classes (3**) and ground truth classes (2b) for calibration records of radar or lidar data (2a);
• determining (260) a calibration score (4b) of the post-hoc calibration operation (4) based on a comparison between at least one classification accuracy (1a) and highest confidence scores (3) of records of data (2a) from which this classification accuracy was determined; and
• optimizing (270) parameters (4a) that characterize the behaviour of the post-hoc calibration operation (4) with the goal of improving the calibration score (4b).

**11.** The method (200) of claim 10, further comprising:
• grouping (221), with respect to at least one property of a scene captured in the respective records of radar or lidar data (2a), the calibration records of radar or lidar data (2a) into bins such that the number of records of data (2a) per bin is substantially similar; and
• choosing (231, 261) one of several post-hoc calibration operations (4) with which to evaluate a calibration record of radar or lidar data (2a) depending on the bin to which this record of data (2a) belongs.

**12.** The method (200) of claim 11, wherein the property comprises one or more of:
• the class for which the classifier (1) attributes the highest confidence score (3) to the calibration record of radar or lidar data (2a);
• a distance between a radar or lidar sensor that has acquired the calibration record of data (2a) and at least one object in the scene; and
• a size of at least one object in the scene.

**12.** A computer program, comprising machine-readable instructions that, when executed by one or more computers, cause the one or more computers to perform a method (100, 200) of any one of claims 1 to 11.

**13.** A non-transitory machine-readable storage medium, and/or a download product, with the computer program of claim 12.

**14.** One or more computers with the computer program of claim 12, and/or with the non-transitory machine-readable storage medium and/or download product of claim 13.

## Amended claims

### Amended claims in accordance with Rule 137(2) EPC.

**1.** A method (100) for evaluating at least one record of radar or lidar data (2), wherein the record of data (2) comprises the dependence of at least one measurement quantity that has been derived from reflected radar or lidar radiation on spatial coordinates, the method comprising the steps of:
• mapping (110), by means of a given classifier (1), the record of radar or lidar data (2) to a set of confidence scores (3) with respect to classes of a given classification;
• processing (120) the set of confidence scores (3), and/or an intermediate product from which the classifier computes confidence scores (3), by means of a post-hoc calibration operation (4) that is configured to match the confidence scores (3) to the classification accuracy (1a) of the classifier (1) with respect to the record of radar or lidar data (2) wherein the post-hoc calibration operation (4) comprises at least one function whose behaviour is **characterized by** trained parameters, wherein the function comprises a neural network, a Gaussian process, and/or a histogram binning function; and
• outputting (130) the so-processed set of confidence scores (3), and/or a set of confidence scores (3) that results from the so-processed intermediate product, as an evaluation result (3*) of the record of radar or lidar data (2).

**2.** The method (100) of claim 1, wherein the record of radar or lidar data (2) specifically is a record of data that has been acquired using at least one radar or lidar sensor carried by a vehicle (50) and configured to monitor at least part of the environment of the vehicle (50), and wherein the method further comprises:
• determining (140) an actuation signal (140a) based at least in part on the evaluation result (3*); and
• actuating (150) the vehicle (50) with the actuation signal (140a).

**3.** The method (100) of claim 2, wherein the determining (140) an actuation signal (140a) comprises:
• choosing (141), out of several possible actions, an action to be performed by the vehicle (50), wherein a severity of this action is commensurate with the highest confidence score in the evaluation result (3*), wherein the severity of an action comprise a cost, a danger, a risk or even a damage that the action is likely to incur; and
• determining (142) an actuation signal (140a) that causes the vehicle (50) to perform the chosen action.

**4.** The method (100) of any one of claims 2 or 3, wherein the actuation signal (140a) is determined (143) based additionally on an evaluation of measurement data that has been acquired by at least one further sensor that is configured to monitor at least part of the environment of the vehicle (50).

**5.** The method (100) of any one of claims 1 to 4, wherein
• the mapping (110) to confidence scores (3) specifically comprises:
∘ computing (111) logits by means of the classifier (1), wherein each logit is a logarithm of odds that the record of data (2) represents a particular class; and
∘ transforming (112) these logits into confidence scores (3) by means of a softmax function; and
• the processing (120) by means of the calibration operation (4) is applied to the logits as intermediate products.

**7.** The method (100) of any of claims 1 to 6, wherein the function comprises a neural network, a scaling function, a Gaussian process, and/or a histogram binning function.

**8.** A method (200) for training at least one post-hoc calibration operation (4) for use in the method (100) of any one of claims 1 to 7, comprising the steps of:
• providing (210) a trained classifier (1) that is configured to map a record of radar or lidar data (2) to a set of confidence scores (3) with respect to classes of a given classification;
• providing (220) a set of calibration records of radar or lidar data (2a), wherein each such record of data (2a) is labelled with one ground truth class (2b);
• processing (230) the calibration radar or lidar data (2a) with the method (100) of any one of claims 1 to 9, wherein, in this processing, the to-be-trained post-hoc calibration operation is used;
• determining (240), for each calibration record of radar or lidar data (2a), the class with the highest confidence score (3) in the evaluation product (3*) as the detected class (3**) to which the classifier (1) attributes this record of data (2a);
• determining (250) at least one classification accuracy (1a) of the trained classifier (1) based on a comparison between detected classes (3**) and ground truth classes (2b) for calibration records of radar or lidar data (2a);
• determining (260) a calibration score (4b) of the post-hoc calibration operation (4) based on a comparison between at least one classification accuracy (1a) and highest confidence scores (3) of records of data (2a) from which this classification accuracy was determined; and
• optimizing (270) parameters (4a) that characterize the behaviour of the post-hoc calibration operation (4) with the goal of improving the calibration score (4b).

**9.** The method (200) of claim 8, further comprising:
• grouping (221), with respect to at least a property of a scene captured in the respective records of radar or lidar data (2a), the calibration records of radar or lidar data (2a) into bins such that the number of records of data (2a) per bin is substantially similar; and
• choosing (231, 261) one of several post-hoc calibration operations (4) with which to evaluate a calibration record of radar or lidar data (2a) depending on the bin to which this record of data (2a) belongs.

**10.** The method (200) of claim 9, wherein the property comprises one or more of:
• the class for which the classifier (1) attributes the highest confidence score (3) to the calibration record of radar or lidar data (2a);
• a distance between a radar or lidar sensor that has acquired the calibration record of data (2a) and at least one object in the scene; and
• a size of at least one object in the scene.

**11.** A computer program, comprising machine-readable instructions that, when executed by one or more computers, cause the one or more computers to perform a method (100, 200) of any one of claims 1 to 10.

**12.** A non-transitory machine-readable storage medium, and/or a download product, with the computer program of claim 11.

**13.** One or more computers with the computer program of claim 11, and/or with the non-transitory machine-readable storage medium and/or download product of claim 12.
